# EUROPÄISCHE PATENTSCHRIFT

(11) **EP 2 049 249 B1**
(45) Veröffentlichungstag und Bekanntmachung des Hinweises auf die Patenterteilung: **23.05.2012**
(21) Anmeldenummer: 07787708.2
(22) Anmeldetag: 19.07.2007
(51) Int. Cl.: B01J 21/04, B01J 21/06, B01J 23/02, B01J 23/72, B01J 37/03, C01B 3/12, H01M 8/06

(54) **KATALYSATOR FÜR DIE TIEFTEMPERATURKONVERTIERUNG UND VERFAHREN ZUR TIEFTEMPERATURKONVERTIERUNG VON KOHLENMONOXID UND WASSER ZU KOHLENDIOXID UND WASSERSTOFF**
CATALYST FOR LOW-TEMPERATURE CONVERSION AND PROCESS FOR THE LOW-TEMPERATURE CONVERSION OF CARBON MONOXIDE AND WATER INTO CARBON DIOXIDE AND HYDROGEN
CATALYSEUR POUR TRANSFORMATION CRYOGÈNE ET PROCÉDÉ DE TRANSFORMATION CRYOGÈNE DE MONOXYDE DE CARBONE ET D'EAU EN DIOXYDE DE CARBONE ET HYDROGÈNE

(30) Priorität: 26.07.2006 EP 06117843
(43) Veröffentlichungstag der Anmeldung: 22.04.2009
(73) Patentinhaber: BASF SE, 67056 Ludwigshafen (DE)
(72) Erfinder: HATSCHER, Stephan, 28857 Syke (DE); HESSE, Michael, 67549 Worms (DE); HÖLZLE, Markus, 67281 Kirchheim (DE)
(86) Internationale Anmeldenummer: PCT/EP2007/057450
(87) Internationale Veröffentlichungsnummer: WO 2008/012255

(56) Entgegenhaltungen:
- WO-A-03/082468
- VELU S ET AL: "Selective production of hydrogen for fuel cells via oxidative steam reforming of methanol over CuZnAl(Zr)-oxide catalysts" APPLIED CATALYSIS A: GENERAL, ELSEVIER SCIENCE, AMSTERDAM, NL, Bd. 213, Nr. 1, 14. Mai 2001 (2001-05-14), Seiten 47-63, XP004234459 ISSN: 0926-860X

## Beschreibung

Die Erfindung betrifft eine katalytische Zusammensetzung und ein Verfahren zur Tieftemperaturkonvertierung von Kohlenmonoxid (CO) und Wasser (H₂O) zu Kohlendioxid (CO₂ und Wasserstoff (H₂), insbesondere für die Verwendung in Brennstoffzellensystemen. Die Erfindung betrifft weiterhin ein Verfahren zu Herstellung eines solchen Katalysators, wobei der Katalysator ein chromfreier, nicht pyrophorer Kontakt für die Wassergasshiftreaktion ist, der auf einer Hydrotalcitphase als Precursor beruht.

Das Verfahren zur Herstellung von Wasserstoff durch die Konvertierungsreaktion (auch: Shiftreaktion) von H₂O und CO zu H₂ und CO₂ in einem fluiden Medium, im Besonderen zur Herstellung von Wasserstoff in einem Gasstrom, der vor allem aus Wasserstoff, Wasser und Kohlenmonoxid besteht, dient vor allem der Generierung von hochreinem Wasserstoff für Brennstoffzellenanwendungen, im Besonderen zur Verwendung für Brennstoffzellen, die auf Protonenaustauschmembranen (PEM, proton exchange membrane) basieren.

Brennstoffzellen setzen direkt chemische Energie zu elektrischer Energie um und vermeiden damit mechanische Verfahren. Sie werden als Energiequelle für verschiedene Anwendungen vorgeschlagen. Eine Brennstoffzelle kann zwei- bis dreimal effektiver als bisherige Verbrennungskraftmaschinen wirken und zeigt dabei sehr geringe Emissionen an Giftstoffen, wie Kohlenmonoxid (CO), Stickoxiden (NOₓ) oder Kohlenwasserstoffen.

Brennstoffzellen, eingeschlossen PEM-Brennstoffzellen (auch als SPE-, solid polymer electrolyte, Brennstoffzellen bekannt) generieren die elektrische Energie durch Reaktion zwischen Wasserstoff als Reduktionsmittel und Sauerstoff als Oxidationsmittel, die beide der Zelle zugegeben werden. Bei einer PEM-Brennstoffzelle sind Anode und Kathode voneinander durch eine Membran getrennt, die im Normalfall aus einem lonentauscherharz aufgebaut ist. Als Material für Anode und Kathode kommt üblicherweise eine feine Mischung aus lonentauscherharz und Kohlenstoffpartikeln, intensiv vermischt mit Katalysatorkörnern, zum Einsatz. Im typischen Betrieb einer solchen Zelle wird Wasserstoffgas elektrolytisch an einer aus Platin auf leitendem Kohlenstoffruß bestehenden Anode zu Protonen oxidiert. Die Protonen passieren die Membran, die ein Fluorsulfonsäurepolymer sein kann. Wasser (H₂O) wird produziert, wenn die Protonen mit dem Sauerstoff in Kontakt kommen, der elektrolytisch an der Kathode reduziert wurde. Die Elektronen fließen durch einen externen Stromkreislauf dieses Prozesses und verrichten die Arbeitsleistung. Beispiele für Membranen und Elektroden Aufbau finden sich in US 5,272,017.

Brennstoffzellen brauchen sowohl eine Sauerstoff- als auch eine Wasserstoffquelle, um zu funktionieren. Der Sauerstoff kann einfach in reiner Form (als O₂) der Luft entnommen werden. Wasserstoff jedoch ist nicht in ausreichender Quantität in der Luft vorhanden, um Brennstoffzellenanwendungen damit zu betreiben. Die geringe Energiedichte (pro Volumen) von isoliertem Wasserstoffgas im Vergleich zu konventionellen Kohlenwasserstoffen macht die direkte Versorgung von Brennstoffzellen mit Wasserstoff für die meisten Anwendungen ungünstig, da ein sehr großes Volumen von Wasserstoffgas benötigt würde, um dieselbe Energie zu erhalten, die in einem sehr viel kleineren Volumen an konventionellen Kohlenwasserstoffen wie Erdgas, Alkohol oder Öl enthalten ist. Daher ist die Umsetzung von den genannten kohlenwasserstoffbasierten Brennstoffen zu Wasserstoffgas eine attraktive Quelle für Wasserstoff für Brennstoffzellenanwendungen.

Die Entfernung von Verunreinigungen wie Schwefel aus den Startmaterialien und die Verringerung der Konzentration an Oxidationsprodukten, die während des Umsetzungsprozesses gebildet werden, so zum Beispiel Kohlenmonoxid, sind die Herausforderungen bei der Wasserstoffproduktion. Brennstoffzellen werden durch geringe Konzentrationen an CO rasch außer Kraft gesetzt, da das CO den Katalysator an der Anode vergiftet. Trotz der Entwicklung von immer stärker CO resistenten Pt/Ru-Anoden sind die Brennstoffzellen weiterhin darauf angewiesen, dass die Wasserstoffquelle Wasserstoff mit einer geringeren CO-Konzentration als 50 ppm liefert.

Derzeit industriell genutzte Methoden zur Produktion von hochreinem H₂ (damit ist Wasserstoff gemeint, der für Brennstoffzellen ausreichend niedrige Konzentrationen an Schwefelkomponenten und CO enthält) sind für die Brennstoffzellenanwendungen nicht anwendbar. Die Produktion von Wasserstoffgas aus natürlich vorkommenden Kohlenwasserstoffen ist in der chemischen Industrie weit verbreitet, zum Beispiel für die Darstellung von Ammoniak aus Stickstoff und Wasserstoff oder bei der Herstellung von Alkohol. Eine Vielzahl von Schritten, die unterschiedliche, hochentwickelte Katalysatoren benötigen, werden in der industriellen Produktion von Wasserstoff genutzt. Eine Serie von Reaktionen wird zum Beispiel typischerweise gebraucht, um die Konzentration an CO unter die benötigten Schwellenwerte, z. B. 50 ppm, zu drücken. Viele dieser Stufen brauchen hohe Drücke (z. B. über 70 bar), hohe Reaktionstemperaturen (zum Teil über 800 °C) und benutzen selbsterhitzende, pyrophore Katalysatoren. Die Dimension und das Gewicht der Anlagen, die benötigt werden, um solche Prozesse sicher ausführen zu können, ist viel zu groß für viele Brennstoffzellenanwendungen, so z. B. im Automobil oder in stationären Hausanlagen. Während die mit diesen Bedingungen verbundenen Risiken erfolgreich in der Umgebung einer industriellen Produktionsstätte gemeistert werden können, sind sie jedoch nicht akzeptabel für die meisten Brennstoffzellenanwendungen.

Die Wassergasshiftreaktion (WGS) ist eine wohlbekannte katalytische Reaktion, die, neben weiteren Anwendungen, auch zur Produktion von Wasserstoff in einem Gasstrom durch chemische Reaktion von CO mit Wasserdampf eingesetzt wird und nach der folgenden Stöchiometrie abläuft:

CO + H₂O → CO₂ + H₂

Dabei benötigt die Reaktion für den Ablauf einen Katalysator. Typische Katalysatoren für diese Reaktion basieren auf Kombinationen von Eisenoxid mit Chromoxid (bei hohen Temperaturen um ca. 350 °C) oder Mischungen aus Kupfer- und Zinkmaterialien (bei niedrigen Temperaturen um ca. 250 °C). Wird die WGS bei Temperaturen unter 300 °C betrieben, so spricht man von einer Tieftemperaturkonvertierung (TTK).

Die derzeitig kommerziell genutzten Wassergasshiftkatalyatoren (WGS-Katalysatoren) zeigen eine Reihe von Nachteilen für Brennstoffzellenanwendungen. Viele kommerzielle WGS-Katalysatoren sind selbsterhitzend und pyrophor, wenn sie Luftsauerstoff ausgesetzt werden. Kommerzielle Hochtemperatur-WGS-Katalysatoren auf Basis von Eisen-Chrom im reduzierten Zustand erreichen Temperaturen von etwa 400 °C, wenn sie atmosphärischen Bedingungen ausgesetzt werden. Ein ähnliches Bild zeigen kommerzielle Kupfer-Zink-basierte Tieftemperatur-WGS-Katalysatoren im reduzierten Zustand, die bei Kontakt mit Luftsauerstoff Temperaturen von bis zu 750 °C erreichen. Der Kontakt von Luft mit WGS-Katalysatoren, die Kupferoxid im reduzierten Zustand auf Ceroxid enthalten, führt zu einer Temperaturerhöhung um etwa 500 bis 600 °C, Platin-Ceroxid-WGS-Katalysatoren erfahren ähnliche Temperaturerhöhungen um etwa 400 °C. In vielen Fällen führt ein solcher rascher und heftiger Temperaturanstieg zum Sintern des Katalysators, was zu einer dauerhaften Zerstörung des Kontaktes führen kann. Ein solcher Temperaturanstieg kann auch dazu führen, dass der reduzierte Kontakt sich spontan an Luft entzündet.

Während die genannten Materialien für den Gebrauch in der industriellen Synthese gut zu verwenden sind, da hier die Reaktionsbedingungen genau überwacht werden können und geeignete Sicherheitsmaßnahmen getroffen werden, um den Kontakt zu Luft zu verhindern, stellen solche Katalysatoren ein erhebliches Risiko dar, wenn sie in Brennstoffzellenanwendungen, wie Automobilen oder stationären Hausanwendungen, eingebaut werden sollten.

Da viele in den Katalysatoren benutzte Materialien auch noch sehr teuer sind, wird ebenfalls nach Katalysatoren gesucht, die bei gleicher oder verbesserter Aktivität billiger sind.

WGS-Katalysatoren sind intensiv beforscht worden. Einen Review bieten Jaques Barbier und Daniel Duprez, Applied Catalysis B: Environmental 4 (1994) 105 bis 140 "Steam effects in three way catalysts", wobei auf eine Reihe von katalytischen Systemen eingegangen wird, einschließlich Systemen, die auf Aluminiumoxid geträgert sind, Ceroxid-Promotoren und einer Reihe von Edelmetallsystemen mit Platin (Pt), Rhodium (Rh) und Palladium (Pd).

WO 02/26619 A2 beschreibt einen Katalysator mit geringer Pyrophorozität für die WGS-Reaktion, der vorzugsweise als Aktivmasse Cu auf Alumina mit einem Zusatz an Cer- und Chromoxid enthält, wobei das Trägermaterial mit den Aktivkomponenten imprägniert wird. Chromoxide gelten als karzinogen und sind damit ebenfalls nicht erwünschte Beimengungen zu Katalysatoren, da sie das Handling für den Kunden stark erschweren.

Pyrophore Katalysatoren haben einen deutlichen Nachteil. Lange und genau zu befolgende Protokolle sind notwendig, um Aktivierung und Passivierung durchzuführen, damit sich der Kontakt an Luft stabil verhält. Außerdem wird spezielle Ausrüstung für diese Protokolle benötigt, so zum Beispiel Durchflussmesser. Aufgrund der exothermen Natur der Reduktion eines Kupferkontaktes erfordert die Aktivierung eines üblicherweise pyrophoren Kupfer-Tieftemperaturkonvertierungs (TTK)-Katalysators eine intensive Überwachung sowohl der Temperatur als auch der Dosierung des reduzierenden Gases (üblicherweise Wasserstoff), die über ein Trägergas (normalerweise Stickstoff oder Erdgas) erfolgt. In einer typischen Aktivierungsprozedur wird eine geringe Menge an Wasserstoff in einem Trägergas bei geringen Temperaturen auf den Katalysator gegeben. Dann wird die Temperatur des Katalysatorbettes langsam auf eine mittlere Temperatur erhöht. Ist diese erreicht, wird die Konzentration an Wasserstoff im Trägergas allmählich gesteigert. Diese iterativen Schritte werden fortgesetzt, bis das Katalysatorbett komplett reduziert ist. Geeignete Vorsichtsmaßnahmen müssen getroffen werden, um die Temperatur unterhalb von 230 °C zu halten, da der Kupferkontakt oberhalb dieser Temperaturschwelle zu sintern beginnt. Analog müssen geeignete Kontrollen und Prozeduren genutzt werden, um sicher einen gebrauchten pyrophoren Katalysator aus dem Reaktor zu entfernen, da die Oxidation des kupferhaltigen Materials wieder in einer exothermen Reaktion stattfindet. Der Katalysator bedarf eines Passivierungsschrittes, um sicher den Reaktor entladen zu können. In einer typischen Passivierungsprozedur wird in ein inertes Trägergas (üblicherweise Stickstoff) langsam Luft eindosiert, um die Konzentration an Sauerstoff allmählich anzuheben. Die langsame, stufenweise Konzentrationssteigerung von Luft benötigt spezielle Durchflussmesser und Überwachungsausstattung (Catalyst Handbook Second Edition; Twigg, M.V., Ed.; Wolfe Publishing, 1989). Die Protokolle und die verbundene Ausrüstung für die Aktivierung und die Passivierung des Materials tragen zu den Nutzungsproblemen und den Kosten der pyrophoren TTK-Katalysatoren bei.

In Journal of Power Sources 118 (2003) 61 bis 65 beschreibt die Engelhard Corperation, vertreten durch W. Ruettinger, O. Ilinich und R. J. Farrauto, einen Selektra Shift Katalysator, der eine nicht-pyrophore Alternative zu den gängigen Cu-ZnO-Katalysatoren darstellen soll. Dieser Katalysator erreicht bei der niedrigen GHSV von 2.500 h⁻¹ und einer Gaszusammensetzung von 8 % CO, 10 % CO₂, 43 % H₂, 26 % H₂O das Gleichgewicht der Shiftreaktion bei 220 °C. Wie die Abbildung 4 der Veröffentlichung zeigt, deaktiviert der Katalysator bei Kontakt mit Luft leicht. Die Grafik 5, die die Stabilität des Katalysators gegenüber Kondenswasser zeigen soll, zeigt ebenso eine Deaktivierung. Ein entsprechendes Verfahren ist in WO 02/26619 offenbart.

S. Velu et al. beschreiben in "Oxidative steam reforming of methanol over CuZnAl(Zr)-oxide catalysts, a new and efficient method for the production of CO-free hydrogen for fuel cells", Chem. Commun.(1999), 2341-2342, einen Cu/Zn/Al/(Zr)-haltigen Katalysator, der unter Zusatz von Sauerstoff eine hohe Stabilität und katalytische Aktivität in der Methanolreformierung zeigt.

Gesucht wurde ein WGS-Katalysator mit einer signifikant geringeren Wärmetönung bei Kontakt mit Luftsauerstoff, mit geringeren Produktionskosten, mit wenigstens vergleichbarer katalytischer Aktivität im Vergleich zu existierenden Systemen, mit einer stabilen Performance bei Kontakt mit Luftsauerstoff bzw. bei Kondensation von Wasser auf dem Katalysator und in einer Form, die stabil, haltbar und praktisch für den Gebrauch in Brennstoffzellenanwendungen ist. Insbesondere muss der Katalysator typische Anfahr- und Abschaltprozesse (Kondensation von Wasser auf dem Katalysator bzw. Abschaltung durch Überströmen mit Luft, d. h. Atomosphärenwechsel) gut überstehen.

Die Aufgabe der Erfindung bestand damit in der Bereitstellung eines solchen WGS-Katalysators.

Gegenstand der Erfindung ist damit ein chromfreier Katalysator wie in den Ansprüchen 1 bis 6 beschrieben.

Gegenstände der Erfindung sind weiterhin ein Verfahren zur Herstellung eines solchen Katalysators sowie ein Verfahren zur Tieftemperaturkonvertierung von Kohlenmonoxid und Wasser zu Kohlendioxid und Wasserstoff, wie in den Ansprüchen 7 und 8, sowie in den Ansprüchen 9 und 10 beschrieben.

Gegenstand der Erfindung ist die Verwendung wie in Anspruch 11 beschrieben

Obwohl üblicherweise in der Gleichgewichtsreaktion CO + H₂O → CO₂ + H₂ im Bereich niedriger Temperaturen von etwa 200 bis 300 °C kupferhaltige Kontakte in ihrem aktivierten Zustand aufgrund des hohen Anteils an reduziertem metallischen Kupfer pyrophor sind, wurde überraschend gefunden, dass durch Verringerung des Kupferanteils Katalysatoren präpariert werden können, die auch im reduzierten Zustand nicht als pyrophor gekennzeichnet werden müssen und trotzdem die notwendige Aktivität vorweisen. Weiterhin wurde überraschend gefunden, dass der erfindungsgemäße Kontakt unter den Bedingungen typischer Anfahr- und Abschaltprozesse, insbesondere bei Atmosphärenwechsel und Wasserdampfkondensation, keinen Aktivitätsverlust erleidet.

Der erfindungsgemäße Katalysator enthält ein Mischoxid aus wenigstens CuO, ZnO und Al₂O₃, besonders bevorzugt aus wenigstens CuO, ZnO, Al₂O₃ und ZrO₂.

Strukturelle Basis dieser Katalysatoren ist der Hydrotalcit. Ein Hydrotalcit ist ein synthetischer anionischer Ton mit Bruzit-analogen Schichten der ungefähren Zusammensetzung:

M^{II}₆M^{III}₂(OH)₁₆CO₃·4H₂O,

wobei
M" mindestens ein zweiwertiges Metallion und
M^{III} mindestens ein dreiwertiges Metallion darstellt.

Erfindungsgemäß ist M" Kupfer und Zink, enthalten sein können zusätzlich aber auch andere zweiwertige Metallkationen, beispielsweise Fe, Co, Mg, Ca, Mn, Ni, Sr, Ba, vorzugsweise Mg, Ca, Sr, Ba oder Ni.

Erfindungsgemäß ist M^{III} Aluminium, enthalten sein können zusätzlich aber auch andere dreiwertige Metallkationen, beispielsweise ausgewählte aus der Reihe der Lanthaniden, La, Sc, Y, Ga, In oder auch Fe, vorzugsweise Elemente, ausgewählt aus der Reihe der Lanthaniden, La, Sc oder Y.

Im erfindungsgemäßen Katalysator liegen die genannten Elemente nach der Kalzination des Katalysatorprecursors als Oxide in folgenden Verhältnissen vor:
CuO von 6 bis 12 Gew.-%.
ZnO von 40 bis 80,5 Gew.-%, bevorzugt von 50 bis 77 Gew.-%, besonders bevorzugt von 60 bis 75 Gew.-%.
Al₂O₃ von 17,5 bis 45 Gew.-%, bevorzugt von 17,5 bis 35 Gew.-%, besonders bevorzugt von 17,5 bis 25 Gew.-%.

Um den Strukturtypus des Hydrotalcits zu erhalten, muss wenigstens ein Al₂O₃-Anteil von 17,5 Gew.-% im Kontakt vorhanden sein.

Näheres dazu ist in F. Trifirö et al., Preparation and Properties of Copper Synthetic Clays, in: Characterization of Porous Solids, Hrsg.: K.K. Unger et al. (1988), Seite 571 ff. beschrieben.

Das Mischoxid enthält vorteilhafterweise zusätzlich Zirkoniumoxid in einer Menge von 0 bis 10 Gew.-%, bevorzugt von 1 bis 7 Gew.-%, besonders bevorzugt von 2 bis 5 Gew.-%.

Das ZrO₂ sorgt dafür, dass die Schichtstruktur "aufgebrochen" wird, damit die einzenen Aktivzentren katalytisch besser zugänglich sind. Um diese vorteilhafte Wirkung zu erzielen, werden in besonderen Ausführungsvarianten beispielsweise ca. 2,5 Gew.-% ZrO₂ eingesetzt.

Dieselbe Aufgabe erfüllen auch mögliche Zusätze von TiO₂, SiO₂ und/oder MnO₂, die ebenfalls eine hohe Affinität auf CO aufweisen.

Neben den erfindungsgemäßen und vorteilhaften Oxiden kann das Mischoxid weitere Oxide, wie beispielsweise Erdalkalimetalloxide, aufweisen. Sind im Mischoxid solche weiteren Oxide enthalten, dann höchstens in einer Menge von 25 Gew.-%, vorzugsweise höchstens 10 Gew. %.

Der erfindungsgemäße Katalysator kann neben dem oben beschriebenen Mischoxid in geringen Mengen natürlich weitere Verbindungen enthalten, wie sie beispielweise als übliche Verunreinigungen auftreten.

Der erfindungsgemäße Katalysator ist chromfrei.

Er enthält vorteilhafterweise kein Edelmetall. Edelmetalle zeigen im genannten Temperaturbereich nur bei sehr hohen und somit unwirtschaftlichen Konzentrationen eine ausreichende Aktivität auf die Shiftreaktion.

Der Precursor des erfindungsgemäßen Katalysators liegt erfindungsgemäß im Wesentlichen als Hydrotalcit vor. Daneben können aber auch andere Strukturen, wie beispielsweise Aluminiumoxide o. ä., auftreten. "Im Wesentlichen" bedeutet im Rahmen dieser Erfindung zu mindestens 80 Gew.-%, vorteilhafterweise zu mindestens 90 Gew.-%, besonders bevorzugt zu mindestens 95 Gew.-%.

Die Hydrotalcit-Struktur wird nachgewiesen durch XRD.

Die Herstellung des erfindungsgemäßen Katalysators für die Tieftemperaturkonvertierung von Kohlenmonoxid und Wasser zu Wasserstoff und Kohlendioxid kann durch Fällung von Precursorsubstanzen erfolgen.

Als Edukte werden Kupfer, Zink und Aluminium sowie gegebenenfalls weitere Elemente, wie weiter oben bereits beschrieben, eingesetzt.

Der Aluminiumanteil kann dabei in verschiedenen Strukturvarianten, beispielsweise auch als Böhmit oder Aluminasol, vorgelegt werden. Als Edukte für die anderen Metalle bieten sich deren Salze in Form von Nitraten, Chloriden, Carbonaten, Acetaten oder Sulfaten an. Besonders bevorzugt werden die Nitrate, Carbonate und Acetate der Metallkationen genutzt.

Erfindungsgemäß ist die Fällphase im Wesentlichen ein Hydrotalcit. Um diese Struktur zu erhalten, ist besonders auf die Einhaltung von pH-Wert und Temperatur zu achten.

Die Fällung erfolgt vorteilhafterweise im basischen Milieu. Vorzugsweise wird dafür eine Mischlösung aus Soda und NaOH eingesetzt, besonders bevorzugt eine Mischlösung aus 2 molarer NaOH und 0,3 molarer Sodalösung. Die Fällung kann jedoch auch durch andere basische Lösungen erfolgen. Bevorzugt verläuft sie bei einem pH-Wert größer 7,2, besonders bevorzugt bei einem pH-Wert größer 7,5.

Die Fällung erfolgt vorteilhafterweise bei einer Temperatur zwischen 10 und 80 °C, bevorzugt zwischen 15 und 50 °C, besonders bevorzugt zwischen 20 und 40 °C.

Nach der Fällung wird der Katalysator in üblicher Weise gewaschen, getrocknet, eventuell noch calciniert und mit Grafit oder einem anderen Schmiermittel tablettiert. An die Tablettierung kann sich eine weitere Calcination anschließen.

Der erfindungsgemäß hergestellte Katalysator ist nicht pyrophor. Die Pyrophorizität eines Materials wird nach der EG-Richtlinie 92/69/EWG, Anhang A.13, festgestellt. Ein weiterer möglicher Test ist der "Test auf Selbstentzündung" mit der Prüfung nach Grewer (VDI 2263, Blatt 1, Kap. 1.4.1), bei der die Temperaturerhöhung einer Probe von 10 ml Volumen bei Inkontaktbringung der Probe mit Luftsauerstoff beobachtet wird. Eine weitere Testmöglichkeit ist mit der "Drahtkorbmethode" gegeben, die zur Einstufung des Selbstentzündungsverhaltens für Transportzwecke dient (GGVS/ADR Anlage A, UN-Recommendations on the Transport of Dangerous Goods, Model Regulations, Abschnittte 2.4.3.2f and Manual of Tests and Criteria, Abschnitt 33.3).

Der erfindungsgemäße Katalysator weist nach den drei oben genannten Tests keine Pyrophorizität auf.

Zur Quantifizierung wurde folgendes Untersuchungsverfahren zum thermischen Verhalten von Katalysatoren herangezogen:
Die Katalysatoren werden gemahlen und in einer Wasserstoff/Argon-Atmosphäre bei 350 °C reduziert. Sie werden dann bei 250 °C für zwei Stunden einem Gasstrom mit 10 % O₂ ausgesetzt. Das DTA-Signal bei der Reoxidation ist proportional zu der Exothermie der Reaktion und damit der Pyrophorizität.

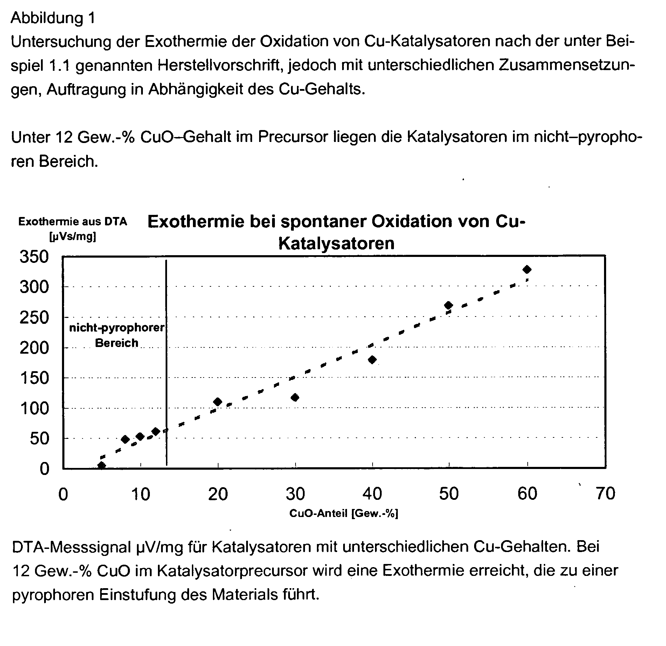

Abbildung 1 zeigt die Abhängigkeit der Exothermie von dem Cu-Gehalt von Cu-Katalysatoren, die sich aus dem Hydrotalcit-Precursor ergeben. Damit wird bei seinem Einsatz das durch Pyrophorizität gegebene Risiko durch den Kontakt von Luft mit reduzierten Katalysatoren deutlich verringert. Die Reduzierung des Risikos macht den Katalysator wesentlich einfacher im Umgang, sowohl was seine Aktivierung wie auch seine Passivierung betrifft.

Die katalytische Aktivität des erfindungsgemäßen Katalysators ist vergleichbar mit der existierender Systeme. Vorteilhaft ist jedoch, dass der Katalysator bei Atmosphärenwechsel und Wasserdampfkondensation keinen Aktivitätsverlust erleidet. Da beide Schritte typische Bedingungen beim Abschalten bzw. beim Einschalten eines Brennstoffzellensystems sind, ist es wichtig, dass Atmosphärenwechsel oder Wasserdampfkondensation zu keinem schädlichen Aktivitätsverlust führen.

Der erfindungsgemäße Katalysator ist stabil, haltbar und ökonomisch herstellbar. Die Gefahr der Sinterung der Aktivmasse bei Kontakt mit Luft ist sehr gering. Er zeigt auch nach Nutzung und Kondensation unter Wasserdampf ausreichende Härte und Seitendruckfestigkeit.

Der erfindungsgemäße Katalysator kann in einer beliebigen Form eingesetzt werden, beispielsweise als Beschichtung eines Monolithen, als Formkörper in Strang- oder Tablettenform oder als Pulver. Eine stabile Form wird bevorzugt, um Abrieb und Staubbildung zu vermeiden.

Die vorliegende Erfindung erfüllt alle Anforderungen, die an einen verbesserten WGS-Katalysator gestellt werden. Der erfindungsgemäße Katalysator ist damit geeignet, um Wasserstoff aus einem Gasstrom zu erzeugen und praktikabel für den Gebrauch in Brennstoffzellenanwendungen.

Das erfindungsgemäße Verfahren zur Tieftemperaturkonvertierung von Kohlenmonoxid und Wasser zu Kohlendioxid und Wasserstoff unterscheidet sich von üblichen Verfahren des Standes der Technik durch den Einsatz eines chromfreien Katalysators, der ein Mischoxid aus wenigstens Kupferoxid, Zinkoxid und Aluminiumoxid enthält, wobei der Katalysatorprecursor im Wesentlichen als Hydrotalcit vorliegt und der Gehalt an Kupferoxid höchstens 20 Gew.-% beträgt.

Ansonsten kann die WGS-Reaktion unter den üblichen Bedingungen durchgeführt werden. Vorteilhafterweise erfolgt sie bei Temperaturen von 150 bis 350 °C, besonders bevorzugt bei Temperaturen von 180 bis 320 °C. Der Katalysator ist aber auch in WGS-Reaktionen, die bei Temperaturen ablaufen, für die herkömmliche TTK-Katalysatoren des Standes der Technik einsetzbar sind, geeignet.

In einer vorteilhaften Anwendung wird das erfindungsgemäße Verfahren zur Erzeugung von Wasserstoffgas aus einem Gasstrom oder einer Gasprobe aus CO und Wasser durchgeführt. In anderen Anwendungen kann der erfindungsgemäße Katalysator in einem Zwischenschritt eines chemischen Prozesses zur Generierung von Wasserstoff aus einem Gasstrom durch WGS-Reaktion genutzt werden.

Die Erfindung führt zu einen WGS-Katalysator und Verfahren zu seiner Nutzung, wobei das durch Pyrophorizität gegebene Risiko durch den Kontakt von Luft mit reduzierten Katalysatoren deutlich vermindert ist.

Die Erfindung sei durch die nachstehenden Beispiele in nicht einschränkender Weise erläutert:

### Beispiele

Die nachfolgend aufgeführten Begriffe werden im Rahmen dieser Erfindung wie folgt definiert bzw. erläutert:
"Atmosphärenwechsel": Bei Betriebtemperatur wird das Betriebsgas (CO, CO₂, H₂O, H₂, N₂) abgeschaltet und der Katalysator mit Luft überspült. Nach wenigen Minuten wird wieder das Betriebsgas auf den Katalysator gestellt.
"Wasserdampfkondensation": Im laufenden Betrieb werden Reaktoreingang und - ausgang verschlossen. Der Reaktor kühlt über Nacht ab. Das im Betriebsgas enthaltene Wasser kondensiert auf dem Katalysator aus. Nach 12 bis 16 Stunden wird der Reaktor wie gewohnt wieder mit Betriebsgas angefahren.
"DTA": Die "Differential thermal analysis" ist eine Analysenmethode zur Bestimmung der emitierten oder absorbierten Wärme (exo- bzw. endotherm) einer Probe als Funktion der Temperatur und/oder der Zeit.
"GHSV": Die "Gas hourly space velocity" ist eine Angabe über den Gasfluss eines Reaktionsgases in Litern pro Liter Katalysator und pro Stunde bei Standardtemperatur und Standarddruck.
"Seitendruckfestigkeit", "SDF": Die Seitendruckfestigkeit ist ein Maß für die Stabilität eines Materials bei Ausübung von Druck auf seine Seitenflächen. Das Material wird dazu zwischen zwei Stempeln eingespannt (Vorkraft 0,5 N), die sich dann mit 1,6 mm/min Prüfgeschwindigkeit aufeinander zu bewegen und das Material zerdrücken. Die Kraft, die zum Zerdrücken des Materials benötigt wird, wird aufgezeichnet. Daten ergeben sich über eine statistische Auswertung von wenigstens 20 Formkörpern.

### Beispiel 1.1

### Synthese eines Katalysators der Zusammensetzung: 8 Gew.-% CuO, 72 Gew.-% ZnO, 17,5 Gew.-% Al₂O₃, 2,5 Gew.-% ZrO₂

1,031 kg Cu-Nitratlösung (19,4 %ig), 9,983 kg Zn-Nitratlösung (18,03 %ig) und 5,388 kg Al-Nitratlösung (8,12 %ig) wurden vermischt (Lösung 1). 0,1462 kg Zr-Carbonat wurden in 0,179 kg HN03 (69,3 %ig) gelöst (Lösung 2). Lösung 3 wurde angesetzt aus 2 molarer NaOH und 0,3 molarer Sodalösung. Lösung 3 wurde vorgelegt, die Lösungen 1 und 2 parallel dazu gegeben.

Das Gemisch wurde auf 50 °C hochgeheizt und 1 Stunde nachgerührt. Der pH-Wert lag am Ende bei 8,0.

Die Probe wurde anschließend filtriert, gewaschen, getrocknet, bei 550 °C für vier Stunden getempert und zum Schluss mit Grafit tablettiert.

### Beispiel 1.2 - Vergleichsbeispiel (analog WO 02/26619 A2)

### Synthese eines Katalysators der Zusammensetzung: 8 Gew.-% CuO, 15 Gew.-% CeO₂, 2 Gew.-% Cr₂O₃ auf 75 Gew.-% Al₂O₃

Wie in WO 02/26619 A2, Beispiel 2, beschrieben, wurden Al₂O₃-Kugeln DD-442 bei 500 °C getempert (Oberfläche 230 m²/g). Auf die Kugeln wurden Lösungen aus Cernitrat, Chromnitrat und Kupfernitrat nacheinander aufgesprüht und jeweils nach dem Tränken bei 500 °C calciniert.

Beispiel 1.3: - Vergleichsbeispiel (typischer hoch-kupferhaltiger Katalysator) Synthese eines Katalysators der Zusammensetzung: 49 Gew.-% CuO, 30 Gew.-% ZnO, 18,5 Gew.-% Al₂O₃, 2,5 Gew.-% ZrO₂

Nitratlösungen aus Cu, Zn und Al wurden im Verhältnis der Oxide (Gew.-%) 49 : 30 : 18,5 vermischt. Dazu wurde Zirkoniumcarbonat im Verhältnis der Oxide 2,5 Gew.-% in konzentrierter Salpetersäure gelöst. Eine Mischlösung aus Natronlauge und Soda wurden angesetzt. Die Lösungen wurden vereinigt, gerührt und der Katalysatorprecursor gefällt. Die Probe wurde anschließend analog Beispiel 1.1 filtriert, gewaschen, getrocknet, bei 550 °C für vier Stunden getempert und zum Schluss tablettiert.

### Beispiel 1.4: - Vergleichsbeispiel (geringer CuO-Gehalt auf Al₂O₃)

### Synthese eines Katalysators der Zusammensetzung: 8 Gew.-% CuO, 14 Gew.-% CeO₂ auf Al₂O₃

Sasol-Al₂O₃-Kugeln wurden in der Porzellanschale vorgelegt und unter Rühren wurde Cernitratlösung zugetropft. Die Kugeln wurden nach dem Tränken kurz nachgerührt und sofort getrocknet und kalziniert. In einem zweiten Arbeitsschritt analog dem ersten wurden die Kugeln mit Cu-Nitratlösung beschichtet. Die Trocknung erfolgte über jeweils 2 h bei 120 °C, die Kalzination bei 550 °C im Muffelofen.

### Beispiel 1.5: - Vergleichsbeispiel (Zusatz von Cr₂O₃)

### Synthese eines Katalysators der Zusammensetzung: 8 Gew.-% CuO, 67 Gew.-% ZnO, 17,5 Gew.-% Al₂O₃, 2,5 Gew.-% ZrO₂, 5 Gew.-% Cr₂O₃

Es wurde analog Beispiel 1.1 verfahren, wobei zusätzlich eine Cr-Nitratlösung (in Lösung 1) zugegeben wurde.

### Beispiel 1.6: - Vergleichsbeispiel (ohne Al₂O₃)

### Synthese eines Katalysators der Zusammensetzung: 8 Gew.-% CuO, 89,5 Gew.-% ZnO, 2,5 Gew.-% ZrO₂

Es wurde analog Beispiel 1.1 verfahren, wobei Lösung 1 ausschließlich aus der Zn-Nitratlösung bestand.

### Beispiel 1.7: - Vergleichsbeispiel (mit Ce₂O₃ an Stelle von Al₂O₃)

### Endzusammensetzung: 10 % CuO, 50 % ZnO, 37,5 % Ce₂O₃, 2,5 % ZrO₂

Es wurde analog Beispiel 1.1 verfahren, wobei an Stelle von Al-Nitratlösung eine Ce-Nitratlösung eingesetzt wurde.

### Beispiel 1.8: (Variation der Zusammensetzung)

### Synthese eines Katalysators der Zusammensetzung: 8 Gew.-% CuO, 59,5 Gew.-% ZnO, 30 Gew.-% Al₂O₃ (davon 13 Gew.-% als Versal), 2,5 Gew.-% ZrO₂

Es wurde analog Beispiel 1.1 verfahren, wobei ein Teil des Aluminiumoxid (13 Gew.-%) als Versal beigemischt wurde.

### Beispiel 1.9: (Variation der Zusammensetzung - Zusatz von Fe₂O₃)

### Synthese eines Katalysators der Zusammensetzung: 8 Gew.-% CuO, 67 Gew.-% ZnO, 17,5 Gew.-% Al₂O₃, 2,5 Gew.-% ZrO₂, 5 Gew.-% Fe₂O₃

Es wurde analog Beispiel 1.1 verfahren, wobei zusätzlich eine Fe-Nitratlösung (in Lösung 1) zugegeben wurde.

### Beispiel 1.10: (Variation der Zusammensetzung)

### Synthese eines Katalysators der Zusammensetzung: 8 Gew.-% CuO, 82 Gew.-% ZnO, 7,5 Gew.-% Al₂O₃, 2,5 Gew.-% ZrO₂

Es wurde analog Beispiel 1.1 verfahren.

### Beispiel 1.11: (Variation der Zusammensetzung)

### Synthese eines Katalysators der Zusammensetzung: 8 Gew.-% CuO, 74,5 Gew.-% ZnO, 15 Gew.-% Al₂O₃, 2,5 Gew.-% ZrO₂

Es wurde analog Beispiel 1.1 verfahren.

### Beispiel 1.12: (Variation der Zusammensetzung)

### Synthese eines Katalysators der Zusammensetzung: 6 Gew.-% CuO, 74 Gew.-% ZnO, 17,5 Gew.-% Al₂O₃, 2,5 Gew.-% ZrO₂

Es wurde analog Beispiel 1.1 verfahren.

### Beispiel 1.13: (Variation der Zusammensetzung)

### Synthese eines Katalysators der Zusammensetzung: 10 Gew.-% CuO, 70 Gew.-% ZnO, 17,5 Gew.-% Al₂O₃, 2,5 Gew.-% ZrO₂

Es wurde analog Beispiel 1.1 verfahren.

### Beispiel 1.14: (Variation der Zusammensetzung)

### Synthese eines Katalysators der Zusammensetzung: 12 Gew.-% CuO, 68 Gew.-% ZnO, 17,5 Gew.-% Al₂O₃, 2,5 Gew.-% ZrO₂

Es wurde analog Beispiel 1.1 verfahren.

Abbildung 1 zeigt eine Untersuchung der Exothermie der Oxidation von Cu-Katalysatoren nach der unter Beispiel 1.1 genannten Herstellvorschrift, jedoch mit unterschiedlichen Zusammensetzungen und Auftragung in Abhängigkeit des Cu-Gehalts. Unter 12 Gew.-% CuO-Gehalt im Precursor liegen dabei die Katalysatoren im nicht-pyrophoren Bereich.

### Beispiel 2.1

In einen beheizbaren Reaktor wurde der Katalysator eingefüllt. Das Volumen wurde so angepasst, dass sich jeweils immer gleich viel Aktivmasse Kupfer im Reaktor befand. Der Katalysator wurde unter Wasserstoff und bei erhöhter Temperatur reduziert.

Eine Gaszusammensetzung von 4 Vol.-% CO, 8 Vol.-% CO₂, 28 Vol.-% N₂, 30 Vol.-% H₂ und 30 Vol.-% H₂O wurde über den Katalysator mit einer GHSV von 7.500 h⁻¹ gegeben. Dabei wurde eine Temperaturrampe zwischen 130 und 300 °C durchlaufen und die Temperatur festgestellt, bei der der Katalysator das Gleichgewicht der Reaktion erreicht.

Die Ergebnisse sind in der Tabelle 1 festgehalten.

### Beispiel 2.2

In der in Beispiel 2.1 beschriebenen Apparatur wurden bei etwa 200 °C mehrere Atmosphärenwechsel an dem Katalysator durchgeführt. Die Prozentangabe bezieht sich auf die Veränderung der CO-Konzentration im Abgas. Die für den ersten Katalysator angegeben - 20 % bedeuten demnach, dass sich die CO-Konzentration durch die Atmosphärenwechsel um 20 % gegenüber dem Wert vor dem Atmosphärenwechsel verringert hat. Das wiederum zeigt an, dass der Katalysator signifikant aktiver geworden ist.

Die Ergebnisse sind in der Tabelle 2 festgehalten.

### Beispiel 2.3

In der in Beispiel 2.1 beschriebenen Apparatur wurde die Wasserdampfkondensation auf dem Katalysator durchgeführt. Anschließend wurde der Katalysator wieder unter Reformat auf 130 °C gebracht und die in Beispiel 2.1 beschriebene Temperaturrampe durchlaufen. Es wurde die Temperatur festgestellt, bei der der Katalysator nun das Gleichgewicht der Reaktion erreicht.

Die Ergebnisse sind in der Tabelle 2 festgehalten.

### Beispiel 2.4

Der Versuch wurde analog Beispiel 2.1 durchgeführt, wobei jedoch eine GHSV von 5.000 h⁻¹ und eine Gaszusammensetzung von 8 Vol.-% CO, 10 Vol.-% CO₂, 43 Vol.-% H₂, 26 Vol.-% H₂O eingestellt wurde. Der Katalysator erreichte das thermodynamische Gleichgewicht bei 220°C.

**Tabelle 1:**

| Katalysator | Erreichen des GGW [°C] |
|---|---|
| | Beschreibung Beispiel 2.1 |
| Beispiel 1.1 | 230 °C |
| Beispiel 1.2 | 240 °C |
| Beispiel 1.3 | > 300 °C |
| Beispiel 1.4 | 250 °C |
| Beispiel 1.5 | 260 °C |
| Beispiel 1.6 | 280 °C |
| Beispiel 1.7 | > 300 °C |
| Beispiel 1.8 | 245 °C |
| Beispiel 1.9 | 235 °C |
| Beispiel 1.10 | 240 °C |
| Beispiel 1.11 | 235 °C |
| Beispiel 1.12 | 260 °C |
| Beispiel 1.13 | 220 °C |
| Beispiel 1.14 | 215 °C |

**Tabelle 2:**

| Katalysator | Veränderung durch Atmosphärenwechsel [%] | Erreichen des GGW nach Wasserdampfkondensation [°C] |
|---|---|---|
| | Beschreibung Beispiel 2.2 | Beschreibung Beispiel 2.3 |
| Beispiel 1.1 | -20 % über 16 h^{[1]} | 230 °C^{[1]} |
| Beispiel 1.2 | +/- 0 % über 16 h^{[1]} | 240 °C^{[1]} |
| Beispiel 1.3 | +/- 0 % über 28 h^{[2]} | > 300 °C^{[2]} |

| | | |
|---|---|---|
| ¹ Mech. Härte nach Ausbau noch gut (Seitendruckfestigkeit > 5 N). ² Mech. Härte nach Ausbau ungenügend (nicht mehr messbar). | | |

Der erfindungsgemäße Katalysator (Hydrotalcitstruktur; 10 Gew.-% CuO) zeigte in Versuchen bei einer anspruchsvoll niedrigen Temperatur von 220 °C (typische Reaktionstemperatur = 250 °C) und bei GHSV = 5000 NIGas/IKat·h einen CO-Umsatz von ca. 99 % des thermodynamischen Gleichgewichts und ist damit vergleichbar bzw. leicht verbessert gegenüber Cr-haltigen Katalysatoren des Standes der Technik (Nachstellung Katalysatoren gemäß WO 02/26619). Ein Cr-freier Vergleichskatalysator zeigte eine deutlich schlechtere Performance als die erfindungsgemäßen Katalysatoren.

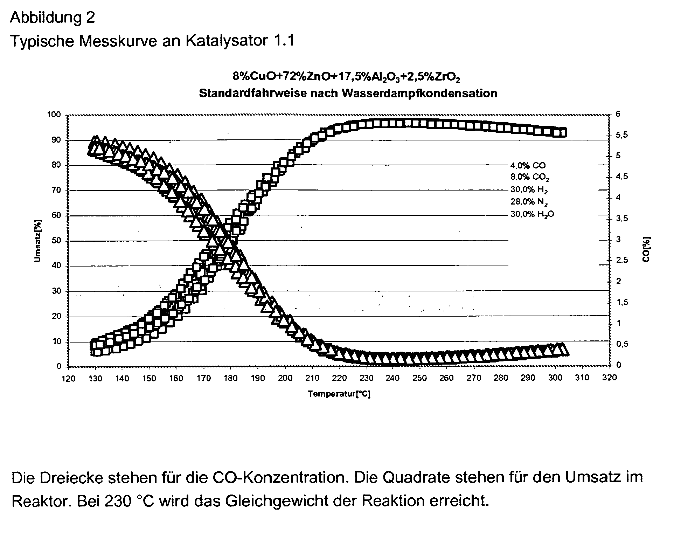

Abbildung 2 zeigt eine typische Messkurve an Katalysator 1.1.

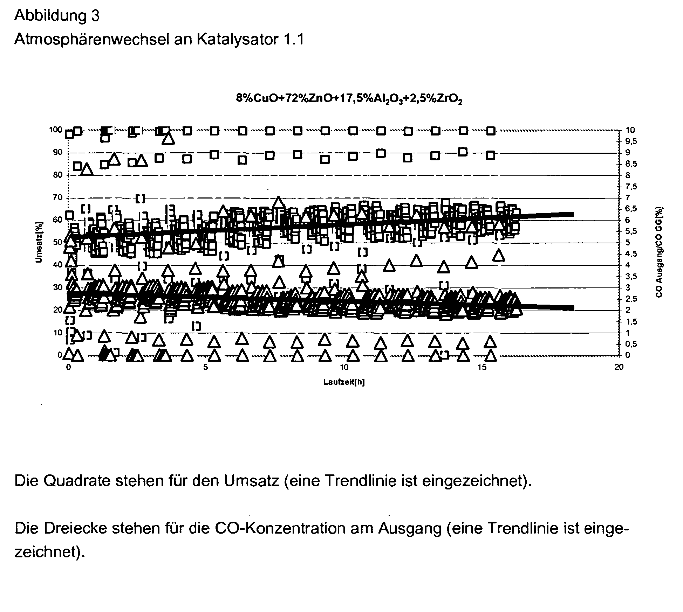

Abbildung 3 zeigt Atmosphärenwechsel an Katalysator 1.1.

## Patentansprüche

1. Chromfreier Katalysator für die Tieftemperaturkonvertierung von Kohlenmonoxid und Wasser zu Wasserstoff und Kohlendioxid, enthaltend ein Mischoxid aus wenigstens Kupferoxid, Zinkoxid und Aluminiumoxid, wobei der Katalysatorprecur sor im Wesentlichen als Hydrotalcit vorliegt, der Gehalt an Kupferoxid von 6 bis 12 Gew.% beträgt und der Katalysator nicht pyrophor ist.

2. Katalysator gemäß Anspruch 1, **dadurch gekennzeichnet, dass** das Mischoxid zusätzlich wenigstens Zirkoniumoxid enthält.

3. Katalysator gemäß Anspruch 1 oder 2, **dadurch gekennzeichnet, dass** er kein Edelmetall enthält.

4. Katalysator gemäß einem der Ansprüche 1 bis 3, **dadurch gekennzeichnet, dass** das Mischoxid 40 bis 80,5 Gew.-% Zinkoxid enthält.

5. Katalysator gemäß einem der Ansprüche 1 bis 4, **dadurch gekennzeichnet, dass** das Mischoxid bis zu 45 Gew.-% Aluminiumoxid enthält.

6. Katalysator gemäß einem der Ansprüche 1 bis 5, **dadurch gekennzeichnet, dass** das Mischoxid bis zu 10 Gew.-% Zirkoniumoxid enthält.

7. Verfahren zur Herstellung eines chromfreien Katalysators für die Tieftemperatur-konvertierung von Kohlenmonoxid und Wasser zu Wasserstoff und Kohlendioxid, gemäß einem der Ansprüche 1 bis 6, **dadurch gekennzeichnet, dass** der Katalysator aus durch Fällung erhaltenen Precursorsubstanzen, enthaltend wenigstens Verwindungen von Kupfer, Zink und Aluminium, gewonnen wird und die Fällung im basischen Milieu stattfindet.

8. Verfahren gemäß Anspruch 7, **dadurch gekennzeichnet, dass** zur Fällung eine Mischung aus Soda und Natriumhydroxid eingesetzt wird.

9. Verfahren zur Tieftemperaturkonvertierung von Kohlenmonoxid und Wasser zu Kohlendioxid und Wasserstoff, **dadurch gekennzeichnet, dass** ein chromfreier Katalysator eingesetzt wird, der ein Mischoxid aus wenigstens Kupferoxid, Zinkoxid und Aluminiumoxid enthält, wobei der Gehalt an Kupferoxid 6 bis 12 Gew.-% beträgt, der Katalysatorprecursor im Wesentlichen als Hydrotalcit vorliegt und der Katalysator nicht pyrophor ist.

10. Verfahren gemäß Anspruch 9, **dadurch gekennzeichnet, dass** die Tieftemperaturkonvertierung bei 150 bis 350 °C durchgeführt wird.

11. Verwendung eines chromfreien Katalysators, definiert gemäß Anspruch 1, zur Erzeugung von Wasserstoff aus einem Gasstrom für Brennstoffzellenanwendungen.

## Claims

1. A chromium-free catalyst for the low-temperature conversion of carbon monoxide and water into hydrogen and carbon dioxide, which comprises a mixed oxide comprising at least copper oxide, zinc oxide and aluminum oxide, with the catalyst precursor being present essentially as hydrotalcite, the copper oxide content being from 6 to 12% by weight and the catalyst being non-pyrophoric.

2. The catalyst according to claim 1, wherein the mixed oxide further comprises at least zirconium oxide.

3. The catalyst according to claim 1 or 2 which does not comprise any noble metal.

4. The catalyst according to any of claims 1 to 3, wherein the mixed oxide comprises from 40 to 80.5% by weight of zinc oxide.

5. The catalyst according to any of claims 1 to 4, wherein the mixed oxide comprises up to 45% by weight of aluminum oxide.

6. The catalyst according to any of claims 1 to 5, wherein the mixed oxide comprises up to 10% by weight of zirconium oxide.

7. A process for producing a chromium-free catalyst for the low-temperature conversion of carbon monoxide and water into hydrogen and carbon dioxide, according to any of claims 1 to 6, wherein the catalyst is obtained from precursor substances which comprise at least compounds of copper, zinc and aluminum and are obtained by precipitation and the precipitation takes place in a basic medium.

8. The process according to claim 7, wherein a mixture of sodium carbonate and sodium hydroxide is used for the precipitation.

9. A process for the low-temperature conversion of carbon monoxide and water into carbon dioxide and hydrogen, wherein a chromium-free catalyst is used, comprising a mixed oxide comprising at least copper oxide, zinc oxide and aluminum oxide, with the copper oxide content being from 6 to 12% by weight, the catalyst precursor being present essentially as hydrotalcite and the catalyst being non-pyrophoric.

10. The process according to claim 9, wherein the low-temperature conversion is carried out at from 150 to 350°C.

11. The use of a chromium-free catalyst, defined according to claim 1, for generating hydrogen from a gas stream for fuel cell applications.

## Revendications

1. Catalyseur exempt de chrome pour la conversion à basse température de monoxyde de carbone et d'eau en hydrogène et dioxyde de carbone, contenant un oxyde mixte constitué par au moins l'oxyde de cuivre, l'oxyde de zinc et l'oxyde d'aluminium, le précurseur du catalyseur se trouvant essentiellement sous forme d'hydrotalcite, la teneur en oxyde de cuivre représentant 6 à 12% en poids et le catalyseur n'étant pas pyrophore.

2. Catalyseur selon la revendication 1, **caractérisé en ce que** l'oxyde mixte contient en outre au moins un oxyde de zirconium.

3. Catalyseur selon la revendication 1 ou 2, **caractérisé en ce qu'**il ne contient pas de métal noble.

4. Catalyseur selon l'une quelconque des revendications 1 à 3, **caractérisé en ce que** l'oxyde mixte contient 40 à 80,5% en poids d'oxyde de zinc.

5. Catalyseur selon l'une quelconque des revendications 1 à 4, **caractérisé en ce que** l'oxyde mixte contient jusqu'à 45% en poids d'oxyde d'aluminium.

6. Catalyseur selon l'une quelconque des revendications 1 à 5, **caractérisé en ce que** l'oxyde mixte contient jusqu'à 10% en poids d'oxyde de zirconium.

7. Procédé pour la préparation d'un catalyseur exempt de chrome pour la conversion à basse température de monoxyde de carbone et d'eau en hydrogène et dioxyde de carbone, selon l'une quelconque des revendications 1 à 6, **caractérisé en ce que** le catalyseur est obtenu à partir de substances précurseurs obtenues par précipitation, contenant au moins des composés du cuivre, du zinc et de l'aluminium et la précipitation ayant lieu en milieu basique.

8. Procédé selon la revendication 7, **caractérisé en ce qu'**on utilise pour la précipitation un mélange de soude et d'hydroxyde de sodium.

9. Procédé pour la conversion à basse température de monoxyde de carbone et d'eau en dioxyde de carbone et hydrogène, **caractérisé en ce qu'**on utilise un catalyseur exempt de chrome, qui contient un oxyde mixte constitué par au moins l'oxyde de cuivre, l'oxyde de zinc et l'oxyde d'aluminium, la teneur en oxyde de cuivre représentant 6 à 12% en poids, le précurseur du catalyseur se trouvant essentiellement sous forme d'hydrotalcite et le catalyseur n'étant pas pyrophore.

10. Procédé selon la revendication 9, **caractérisé en ce que** la conversion à basse température est réalisée à 150 jusqu'à 350°C.

11. Utilisation d'un catalyseur exempt de chrome, défini selon la revendication 1, pour la production d'hydrogène à partir d'un flux gazeux pour des utilisations de pile à combustible.
